# Europäisches Patentamt

# European Patent Office

# Office européen des brevets

(11) Veröffentlichungsnummer: **0 173 898**
**B1**

(12) **EUROPÄISCHE PATENTSCHRIFT**

(45) Veröffentlichungstag der Patentschrift:
**03.05.89**

(51) Int. Cl.⁴: **F 16 D 3/84**

(21) Anmeldenummer: **85110242.6**

(22) Anmeldetag: **16.08.85**

(54) Schutzvorrichtung für eine Welle.

(30) Priorität: **20.08.84 US 642026**

(43) Veröffentlichungstag der Anmeldung:
**12.03.86 Patentblatt 86/11**

(45) Bekanntmachung des Hinweises auf die Patenterteilung:
**03.05.89 Patentblatt 89/18**

(84) Benannte Vertragsstaaten:
**AT DE FR GB IT SE**

(56) Entgegenhaltungen:
**EP-A- 0 073 278**
**BE-A- 384 671**
**DE-A- 1 947 882**
**FR-A- 2 507 266**
**GB-A- 776 888**
**US-A- 2 772 549**
**US-A- 3 108 457**
**US-A- 3 344 618**
**US-A- 4 130 998**

(73) Patentinhaber: **DEERE & COMPANY, 1 John Deere Road, Moline Illinois 61265 (US)**

(72) Erfinder: **Murphy, Kenneth Earl, R.R. No. 1, Dike Iowa 50624 (US)**
Erfinder: **Martin, Ronald Alan, 5414 Fjord Drive, Cedar Falls Iowa 50613 (US)**
Erfinder: **Nies, Gary Michael, 1126 Tiffany Place No. 8, Waterloo Iowa 50701 (US)**

(74) Vertreter: **Feldmann, Bernhard et al, DEERE & COMPANY European Office, Patent Department Steubenstrasse 36-42 Postfach 503, D-6800 Mannheim 1 (DE)**

ACTORUM AG

## Beschreibung

Die Erfindung betrifft eine Schutzvorrichtung für eine Welle, insbesondere für eine Antriebswelle eines Vorderradantriebes eines Ackerschleppers, die sich zwischen einem Getriebegehäuse und einem Gehäuse koaxial zu der Welle erstreckt und die gegenüber dem Getriebegehäuse festlegbar ist.

Es ist schon eine Schutzvorrichtung aus der US-A-4 130 998 bekannt, die ein teleskopartig ausgebildetes Schutzrohr aus zwei Teilen enthält, die in einer Vielzahl von Stellungen miteinander verschraubt werden können, um unterschiedliche Längen des Schutzrohres zu erzeugen. Jeder Teil des Schutzrohrs ist an seinem freien Ende mit einem Bolzen und einem Sicherungssplint auf einem Halter lösbar gehalten, die zu Wartungszwecken entnommen werden können, woraufhin das Schutzrohr in eine gewünschte Stellung gedreht werden kann. Die beiden Teile des Schutzrohrs sind auf einem Teilbereich ihres Umfanges offen, damit sie im Durchmesser vergrössert und somit leichter aufeinandergeschoben werden können. Der Anfang der beiden Teile des Schutzrohres weist einen Abstand zu dem Getriebegehäuse bzw. dem Gehäuse auf.

Dieser Schutzvorrichtung haftet der Nachteil an, dass sie sowohl stirnseitig wie auch in dem offenen Teilbereich ihres Schutzrohres zu viele Eindringmöglichkeiten für groben Schmutz bietet. Aber auch das Übereinanderliegen der Teile auf einem Teilstück ihrer Länge trägt in sich die Gefahr des Festhaftens der beiden Teile aneinander durch Rost oder Schmutz, so dass sie nach einer gewissen Zeit nicht mehr aufeinander verstellt werden können. Insbesondere beim Einsatz in der Landwirtschaft oder unter sonstigen widrigen Einsatzbedingungen ist eine derartige Schutzvorrichtung nicht befriedigend.

Aus der BE-A-384 671 ist eine Schutzvorrichtung für eine Antriebswelle eines Kraftfahrzeugs bekannt, die sich zwischen einem Getriebegehäuse und einem Achsgehäuse erstreckt. Die Schutzvorrichtung enthält ein Schutzrohr, das endseitig von Haltern getragen ist und die Antriebswelle vollends umgibt. Die Antriebswelle und die mit ihr verbundenen Universalgelenke sind somit vollkommen gegen Schmutz, Wasser usw. geschützt; eine Schmierung insbesondere der Universalgelenke ist anscheinend nicht erforderlich.

Es ist zwar auch eine Schutzvorrichtung für die Universalgelenke einer versetzt angeordneten Antriebswelle bekannt (US-A-4 501 572); diese deckt jedoch nur das dem Gehäuse zugeordnete Universalgelenk, nicht aber die Antriebswelle und das dem Getriebegehäuse zugeordnete Universalgelenk ab. Gerade aber die nicht abgedeckte Antriebswelle bringt bei der Anwendung in der Landwirtschaft Gefahren, da sich hochwachsendes Erntegut, Gestrüpp oder sonstige Gegenstände an der Antriebswelle verfangen können und unter Umständen deren Zerstörung bewirken. Ferner muss diese Schutzvorrichtung demontiert werden, um an die Schmiernippel zu gelangen.

Es ist weiterhin bekannt, Gelenkwellen mit drehbar auf ihnen gelagerten Schutzrohren abzuschirmen (US-A-3 504 508, US-A-4 435 166 und US-A-2 772 549). Diese Schutzrohre lassen aber stets endseitig einen Bereich frei, in dem die Universalgelenke nicht abgeschirmt sind. Sie sind ferner meist teleskopartig ausgebildet und neigen bereits bei geringfügigem dauerhaften Ausbiegen aus der Längsachse, etwa aufgrund der Berührung eines Hindernisses, dazu, auf der Gelenkwelle festzuklemmen und somit mit dieser zu rotieren. In einem derartigen Fall bietet das Schutzrohr keinen Schutz mehr, sondern wird selbst zur Gefahr. Das Festsitzen eines Schutzrohres auf der Gelenkwelle führt zudem dazu, dass durch eine in dem Schutzrohr vorgesehene Öffnung der Schmiernippel der Universalgelenke nicht mehr erreicht werden kann, wenn sich das Schutzrohr nicht in der richtigen Stellung gegenüber der Gelenkwelle befindet.

Die der Erfindung zugrundeliegende Aufgabe wird darin gesehen, die Schutzvorrichtung derart zu verbessern, dass bei einer versetzt angeordneten Antriebswelle die Antriebswelle wie auch die Universalgelenke vollkommen bedeckt sind, an den Universalgelenken vorgesehene Schmierstellen ohne Demontage der Schutzvorrichtung erreichbar sind und der bauliche Aufwand möglichst gering gehalten wird.

Diese Aufgabe ist erfindungsgemäss dadurch gelöst worden, dass die Schutzvorrichtung aus einem ersten und einem zweiten Halter und einem Schutzrohr besteht, wobei der erste Halter an dem Getriebegehäuse und der zweite Halter an dem Gehäuse befestigt ist, das Schutzrohr auf oder in dem ersten und dem zweiten Halter drehbar gelagert und festlegbar ist, verschliessbare Aussparungen aufweist und stirnseitig stets geschlossen ist.

Auf diese Weise sind sämtliche sich frei drehende und mit der Antriebswelle verbundene Teile abgeschirmt und das die Antriebswelle voll umgebende Schutzrohr kann bei Bedarf so gedreht werden, dass auf den Universalgelenken vorgesehene Schmierstellen erreichbar sind, indem nämlich das Schutzrohr einfach soweit gedreht wird, bis die Aussparung mit der Schmierstelle fluchtet. Da das Schutzrohr nicht für eine Rotation mit einer hohen Umdrehungszahl pro Minute auf oder in den Halter drehbar gelagert ist, kann es relativ lose gegenüber den Haltern gelagert sein, so dass auch bei einer evtl. auftretenden dauernden Verformung des Schutzrohres kein Verklemmen des Schutzrohres gegenüber den Haltern auftritt und nach wie vor das Schutzrohr zu Wartungszwecken gedreht werden kann.

Um zu vermeiden, dass sich unter den schwierigen Einsatzverhältnissen eines Ackerschleppers in der Landwirtschaft an dem Schutzrohr anlagernder Schmutz in die Aussparungen gelangt und um zu erreichen, dass die Schmierstelle durch die Aussparungen gut zugänglich sind, ist nach einem Vorschlag zur Erfindung vorgesehen, dass das Schutzrohr gegenüber den Haltern um die Längsmittenachse der Welle mindestens aus einer Stellung der Aussparungen oberhalb in eine Stellung unterhalb der Welle drehbar ist. Somit kann während des Arbeitseinsatzes des Ackerschleppers das Schutzrohr so gedreht werden, dass die Aussparungen nach oben weisen, und somit von den Aussparungen gegenüberliegenden Bauteilen abgeschirmt werden, während zu Wartungszwecken das Schutzrohr nach unten drehbar ist, so dass etwa eine Fettpresse problemlos durch die Aussparungen zu den Schmierstellen geführt werden kann. Überdies wäre es bei Antriebswellen, die nicht in der unmittelbaren Nähe von Bauteilen verlaufen, von Vorteil, wenn nach einem weiteren die Erfindung fortentwickelnden Gedanken dafür gesorgt ist, dass die Aussparungen in dem Schutzrohr mittels der Aussenform des Schutzrohres angepasster Deckel, die an dem Schutzrohr festlegbar sind, verschliessbar sind. Dadurch, dass die Aussenform der Deckel an die Aussenform, also an die Krümmung des Schutzrohres angepasst ist, ergeben sich auch keine Kanten, an denen sich Erntegut, Gestrüpp oder dergleichen festhängen könnte.

Dadurch, dass in dem Schutzrohr oder in einem der Halter eine Ausnehmung und auf dem betreffenden Halter oder dem Schutzrohr ein in die Ausnehmung passendes Halteelement vorgesehen ist, wird auf vorteilhafte Weise erreicht, dass das Schutzrohr mittels einfachster Mittel festlegbar ist, wobei das Halteelement gegebenenfalls eine der Aussenform des Schutzrohres angepasste Scheibe ist, die in die halbkreisförmige Ausnehmung in dem Schutzrohr einsetzbar ist.

Unter besonderen Umständen kann es erforderlich werden, das Schutzrohr auch axial gesondert festzulegen oder einen sich endseitig zwischen dem Schutzrohr oder dem Halter und der Antriebswelle sich ergebenden Ringspalt zu verdecken. Zu diesem Zweck ist vorgesehen, dass zwei Dichtplatten vorgesehen sind, die je zumindest die Hälfte des Ringspaltes ausfüllen, in den Ringspalt einsetzbar sind und als axiale Halterung des Schutzrohres dienen. Wenn diese Dichtplatten vorteilhafterweise federnd ausgeführt sind, und die Länge des Schutzrohres entsprechend gewählt ist, kann sich beim Einbau des Schutzrohres eine Vorspannung ergeben, die entweder das vorerwähnte Halteelement überflüssig werden lässt oder zu einer vibrationsfreien Lagerung des Schutzrohres führt.

Damit das Schutzrohr einem geringfügigen Versatz der Antriebswelle angepasst werden kann, ohne grössere bauliche Massnahmen vornehmen zu müssen, ist vorgesehen, dass der erste Halter an dem Getriebegehäuse im Querschnitt rund ist und eine ballige Oberfläche aufweist. Die Balligkeit der Oberfläche des am Getriebegehäuse angebrachten Halters, lässt eine geringfügige Winkelbeweglichkeit des Schutzrohres zu, so dass ein gewisser Versatz ausgeglichen werden kann.

In der Zeichnung ist ein nachfolgend näher beschriebenes Ausführungsbeispiel der Erfindung dargestellt. Es zeigt:

Figur 1 einen Ackerschlepper mit einem an seiner Unterseite angebrachten Vorderradantrieb,

Figur 2 eine Ansicht eines Teils einer erfindungsgemässen Schutzvorrichtung im Bereich eines Gehäuses einer Vorderachse,

Figur 3 die gesamte Schutzvorrichtung,

Figur 4 ein der Schutzvorrichtung zugehöriges Schutzrohr mit Aussparungen,

Figur 5 das Schutzrohr aus Figur 4 in Seitenansicht,

Figur 6 eine Draufsicht auf einen Endbereich des Schutzrohres,

Figur 7 eine Vorderansicht eines das Schutzrohr einenends haltenden ersten Halters,

Figur 8 den ersten Halter im Schnitt entlang der Linie 8–8 und der zugehörigen Pfeile in Figur 7,

Figur 9 eine perspektivische Ansicht eines zweiten den anderen Endbereich des Schutzrohrs tragenden Halters,

Figur 10 eine in den zweiten Halter eingesetzte Dichtplatte in Vorderansicht,

Figur 11 eine in die Aussparungen einsetzbare Schutzkappe in Vorderansicht,

Figur 12 die Schutzkappe im Schnitt entlang der Linie 12–12 und in Blickrichtung der dazugehörigen Pfeile in Figur 11,

Figur 13 die Schutzkappe in Seitenansicht,

Figur 14 den zweiten Halter mit einer angebauten Dichtplatte und

Figur 15 die Schutzvorrichtung im Bereich des ersten Halters und einem Halteelement zwischen dem ersten Halter und dem Schutzrohr.

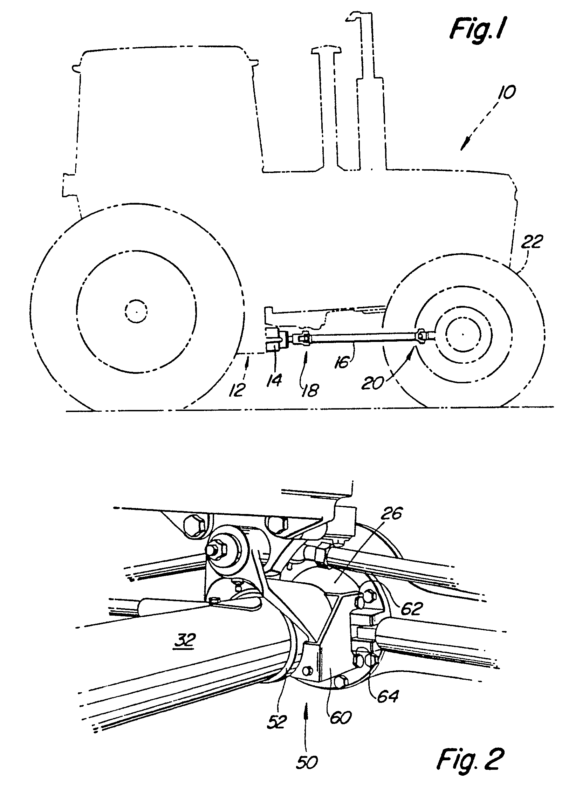

Ein in Figur 1 dargestellter herkömmlicher und mit einem Vorderradantrieb versehener Ackerschlepper 10 enthält ein Getriebegehäuse 12, von dem ein Bereich 14 eine nicht dargestellte Kupplung umfasst. Eine ebenfalls herkömmlich ausgebildete Welle oder Antriebswelle 16, die an ihrem rückwärtigen und ihrem frontseitigen Endbereich mit jeweils einem Universalgelenk 18 und 20 versehen ist, überträgt ein Drehmoment zu Vorderrädern 22 über einen gewöhnlichen nicht gezeichneten Endantrieb und eine Frontantriebswelle 24, die beide in einem Vorderachskörper 26 gelagert sind.

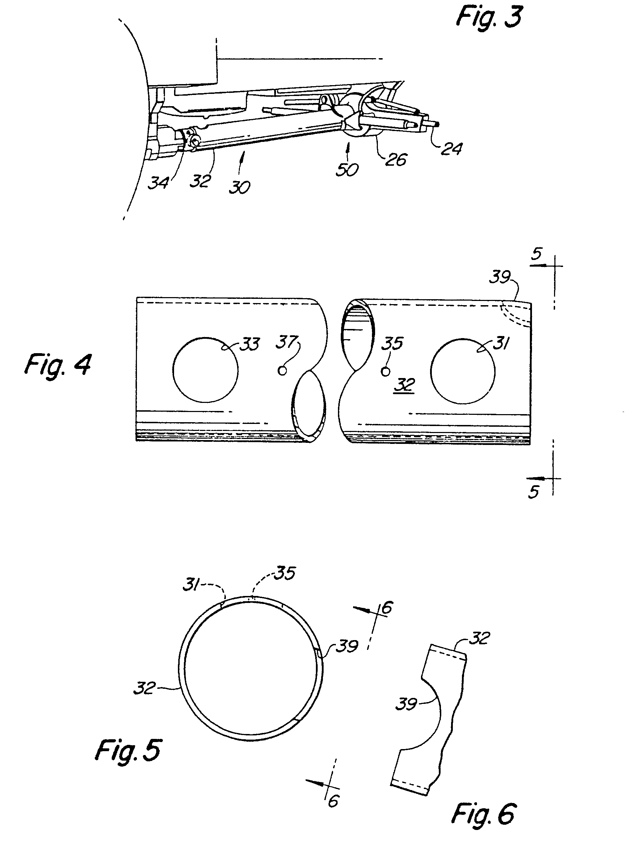

Eine erfindungsgemässe Schutzvorrichtung 30 enthält ein einstückiges nicht teleskopartiges zylindrisches Schutzrohr 32, wie es am besten aus den Figuren 4 bis 6 zu ersehen ist. Dieses Schutzrohr 32 bedeckt und schützt die Antriebswelle 16 und die Universalgelenke 18 und 20. Vorzugsweise ist das Schutzrohr 32 aus einem festen Material, wie etwa einem hochfesten Polyäthylen, hergestellt und weist einen Innendurchmesser von 15,24 cm und eine Wandstärke von 0,64 cm auf, wobei sich diese Werte selbstverständlich nur auf dieses Ausführungsbeispiel beziehen und unter anderen Umständen anders sein können. Sollte jedoch ein noch stärkeres Schutzrohr 32 gefordert werden, was der Fall sein kann, wenn der Ackerschlepper 10 in einem Reisfeld arbeitet, dann könnte das vorgenannte Schutzrohr 32 aus Kunststoff durch ein Schutzrohr 32 aus Stahl mit einem Innendurchmesser von wiederum 15,24 cm und einer Wandstärke von 0,32 cm ersetzt werden.

Vorteilhafterweise ist das Schutzrohr 32 mit einem Paar von Aussparungen 31 und 33 zu Schmier- und oder Wartungszwecken versehen, die sich nahe der Endbereiche des Schutzrohres 32 befinden, so dass an den Universalgelenken 18 und 20 angebrachte Schmiernippel erreichbar sind und die Gelenke der Universalgelenke 18 und 20 bei angebautem Schutzrohr 32 geschmiert werden können. Den Aussparungen 31 und 33 sind ferner Bohrungen 35 und 37 zugeordnet. Ausserdem ist an dem rückwärtigen Endbereich des Schutzrohres 32 eine halbkreisförmige Ausnehmung oder Ausrichtöffnung 39 vorgesehen.

Das Schutzrohr 32 ist über die Antriebswelle 16 schiebbar und bedeckt diese insgesamt mitsamt den Universalgelenken18 und 20.

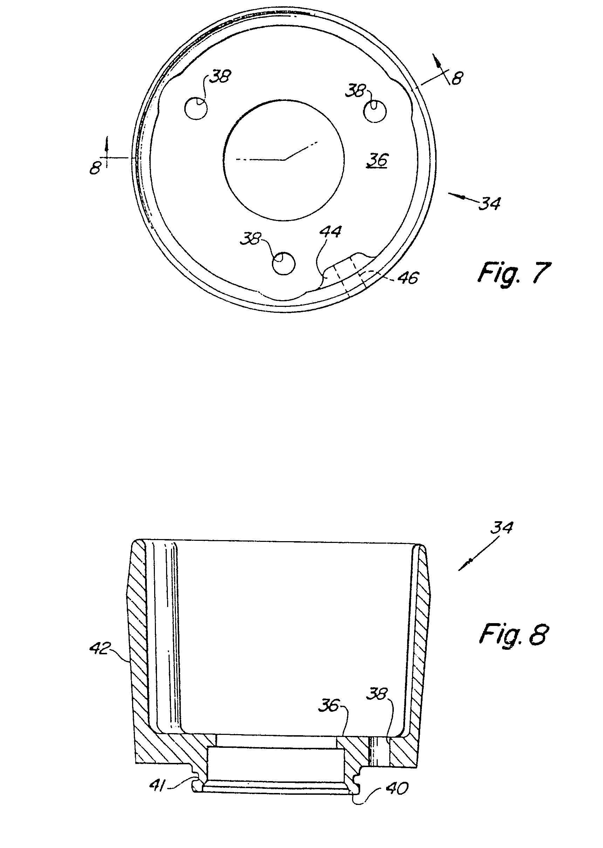

Der rückwärtige Endbereich des Schutzrohres 32 nimmt in sich einen ersten Halter in der Form einer zylindrischen Lagerhülse 34 auf und ist somit auf dieser gelagert, wohingegen die Lagerhülse 34 an den Bereich 14 des Getriebegehäuses 12 angeschraubt ist. Wie am besten aus den Figuren 7 und 8 hervorgeht, enthält die Lagerhülse 34 einen Bodenteil 36 mit einer Vielzahl von Öffnungen 38 zur Aufnahme nicht gezeigter Schrauben, mittels derer die Lagerhülse 34 an den Bereich 14 angeschraubt wird. Von diesem Bodenteil 36 erstreckt sich ein zylindrischer Flansch 40 mit einer O-Ringnut 41 axial fort, der dem Einsatz in eine entsprechend ausgebildete Öffnung in dem Bereich 14 des Getriebegehäuses 12 dient. Ein ebenfalls nicht gezeigter O-Ring wird dabei in diese O-Ringnut 41 eingesetzt, um den Spalt zwischen dem Flansch 40 und der Innenfläche der Öffnung abzudichten. Die Lagerhülse 34 enthält zudem einen konischen oder balligen zylindrischen Abschnitt 42, dessen Bereich mit dem kleinen Durchmesser in den Bodenteil 36 übergeht. Ein Teil des Abschnitts 42 ist mit einem verdickten Anguss 44 versehen, der eine Gewindebohrung 46 enthält. Eine nicht gezeigte Lippendichtung ist gegen die Innenseite des Flansches 42 und die Aussenseite der Antriebswelle 16, die sich durch den Flansch 42 erstreckt, gedrückt, um somit einen Schmiermittelaustritt aus dem Getriebegehäuse 12 zu verhindern.

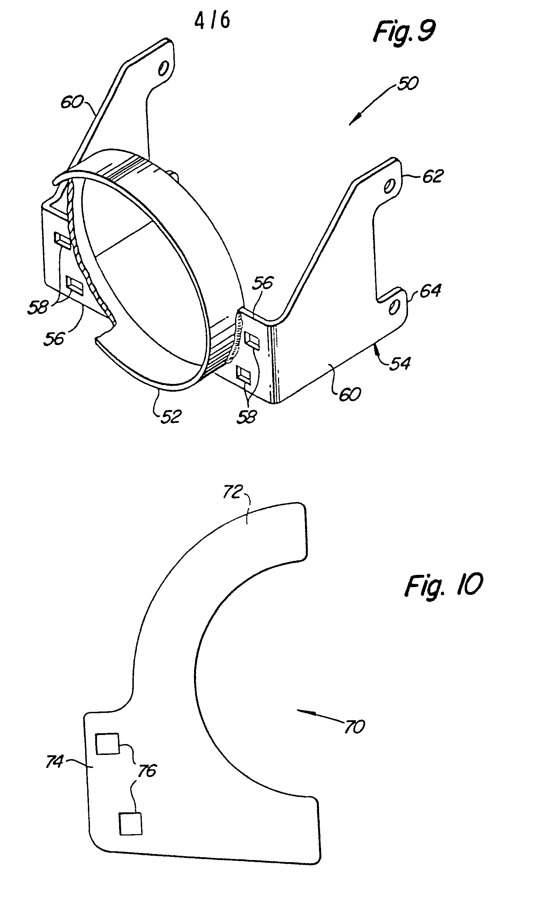

Der vordere Endbereich des Schutzrohres 32 wird in einem zweiten Halter oder einem Frontlager 50 aufgenommen. Mit Blick auf die Figuren 9 und 10 ist zu sehen, dass das Frontlager 50 einen zylindrischen Ring 52 enthält, der in sich gleitend das Schutzrohr 32 aufnimmt, und an dem auf jeder Seite ein Halter 54 angreift. Jeder Halter 54 besteht aus einer Platte 56 mit Durchbrechungen 58. Von jeder Platte 56 erstreckt sich zudem im rechten Winkel ein Arm 60 fort, von denen wiederum jeder ein Paar voneinander getrennte Arme 62 und 64 besitzt. Das Frontlager 50 kann an den Vorderachskörper 26 über die Arme 62 und 64 angebracht werden, wie dies am besten aus Figur 2 hervorgeht.

Wenn das Schutzrohr 32 koaxial über die Antriebswelle 16 geschoben ist, ergibt sich ein Ringspalt zwischen der Innenfläche des Schutzrohres 32 und der Aussenfläche der Antriebswelle 16 bzw. den Universalgelenken 18 und 20. An dem frontseitigen Ende des Schutzrohres 32 ist dieser Ringspalt gegen Eintritt von Schmutz in das Schutzrohr 32 durch ein Paar Dichtplatten 70, von denen eine in Figur 10 gezeigt ist, abgedeckt. Jede Dichtplatte 70 enthält einen Bogenteil 72, der die Hälfte des Ringspaltes überdeckt und einen Flanschteil 74. Der Flanschteil 74 enthält Löcher 76, die zu den Durchbrechungen 58 des Frontlagers 50 passen, so dass die Dichtplatten 70 an das Frontlager 50 dichtend mit dem frontseitigen Ende des Schutzrohres 32 angeschraubt werden können.

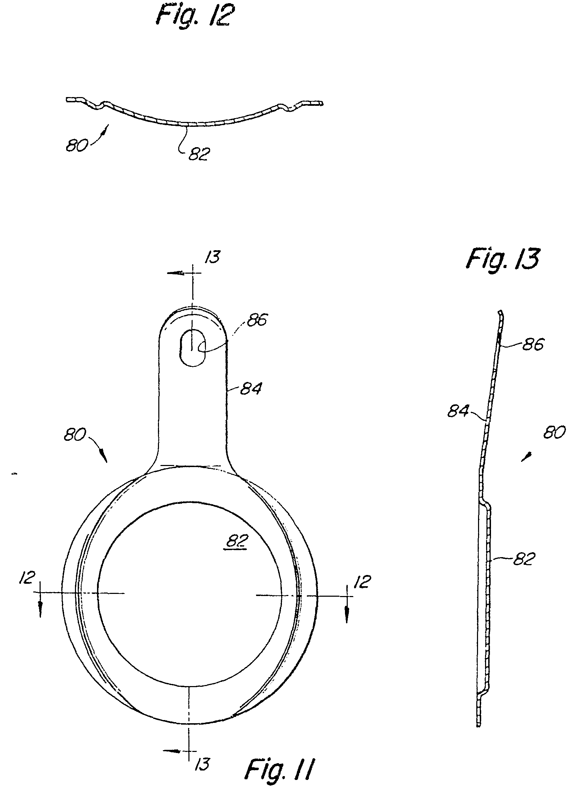

Solange die Aussparungen 31 und 33 in dem Schutzrohr 32 nicht gebraucht werden, sind sie durch vorzugsweise nachgiebige Deckel oder Schutzkappen 80 abgedeckt, wie dies aus den Figuren 11 bis 13 hervorgeht. Die Schutzkappen 80 sind am besten aus einem Federstahl hergestellt und enthalten einen Tellerteil 82, der in den Aussparungen 31 und 33 aufgenommen wird. Die Schutzkappen 80 sind ausserdem mit Schenkeln 84 versehen, in die eine Bohrung 86 eingebracht ist, durch welche sich jeweils eine nicht gezeigte Schraube bis in die Bohrungen 35 und 37 erstrecken kann, um somit die Schutzkappen 80 gegenüber dem Schutzrohr 32 festzulegen.

Zum Anbau dieser Schutzvorrichtung 30 wird zunächst die Antriebswelle 16 demontiert. Anschliessend wird die Lagerhülse 34 an die vordere Endfläche des Bereichs 14 angeschraubt, wobei die Gewindebohrung 46 so zu liegen kommen soll, dass sie mit der Horizontalen einen Winkel nach unten von zirka 15 Grad einschliesst und zwar auf der linken Seite, wenn man nach hinten entlang der Längsachse der Antriebswelle 16 schaut. Anschliessend wird die Antriebswelle 16 mit ihrem rückwärtigen Endbereich an eine sich aus dem Bereich 14 des Getriebegehäuses 12 sich erstreckende Hauptantriebswelle angeschlossen. Danach werden die Schutzkappen 80 in die Aussparungen 31 und 33 eingesetzt und vorzugsweise mittels der Schenkel 84 zusammen mit Scheiben an den Bohrungen 35 und 37 befestigt, so dass sie aus den Aussparungen 31 und 33 entnommen werden können, ohne dass dazu eine Schraube entfernt wird und ohne dass die Schutzkappen 80 von dem Schutzrohr gelöst werden; sie können in einem Wartungsfall also nicht verloren gehen. Sodann wird das Schutzrohr 32 über die Antriebswelle 16 und über die Lagerhülse 34 geschoben und zwar derart, dass die Ausrichtöffnung 39 zur Rückseite des Ackerschleppers 10 zeigt.

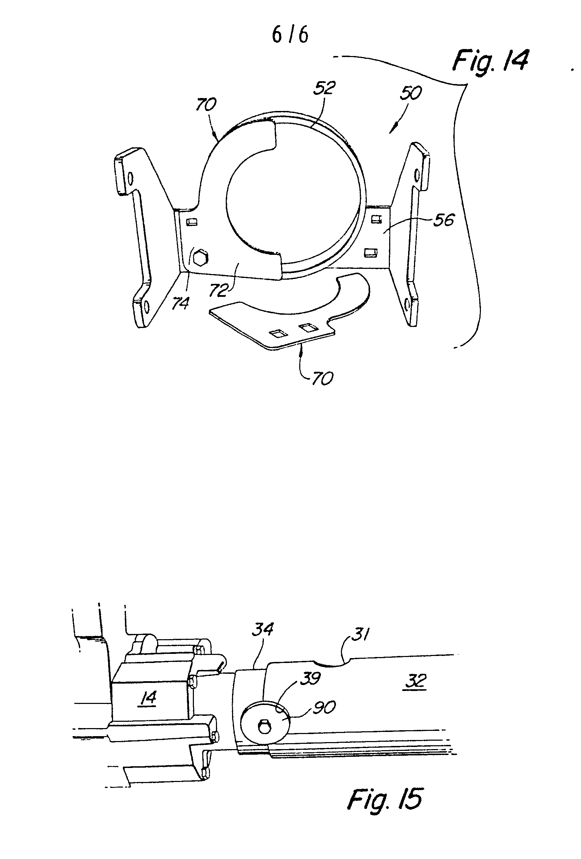

Anschliessend wird das Frontlager 50 um das vordere Ende des Schutzrohres 32 montiert, wozu das Schutzrohr 32 in dem Ring 52 gleitend aufgenommen wird. Das vordere Ende der Antriebswelle 16 wird sodann an ein nicht ersichtliches Gabelgelenk des vorderen Universalgelenks 20 angeschraubt und die Arme 62, 64 des Frontlagers 50 werden an dem Vorderachskörper 26 oder einem damit verbundenen Schwenkgehäuse befestigt. Als nächster Schritt folgt das Anschrauben des Paares Dichtplatten 70 an die Vorderseite der Platten 56 des Frontlagers 50, wie dies aus Figur 14 hervorgeht, so dass die Bogenteile 72 davon den Ringspalt zwischen der Antriebswelle 16 und dem Schutzrohr 32 schliessen.

Das Schutzrohr 32 wird dann nach vorne geschoben, bis sein vorderes Ende die Dichtplatten 70 berührt. Das Schutzrohr 32 wird dabei oder auch anschliessend derart ausgerichtet, dass die Aussparungen 31 und 33 an der Oberseite des Schutzrohres 32 zu liegen kommen, wobei dann die Ausrichtöffnung 39 im Bereich der Gewindebohrung 46 der Lagerhülse 34 zu liegen kommt. Schliesslich wird eine zusammen mit der Ausrichtöffnung 39 ein Halteelement bildende gebogene Arretierscheibe 90, die in der Ausrichtöffnung 39 zu liegen kommt in ihrer Aussenform der Aussenform des Schutzrohres 32 angepasst ist, an die Lagerhülse 34 geschraubt, wozu eine nicht gezeigte Schraube verwendet werden kann, die in die Gewindebohrung 46 eingeschraubt wird. Jedoch kann anstatt der Schraube und der Gewindebohrung 46 auch ein anderes Befestigungselement verwendet werden, etwa ein die Lagerhülse 34 und das Schutzrohr 32 durchdringender Stecker. Auf jeden Fall halten die Arretierscheibe 90 und die Dichtplatten 70 das Schutzrohr 32 axial fest, wobei die Arretierscheibe 90 das Schutzrohr 32 zusätzlich auch tangential arretiert und dadurch dafür sorgt, dass die Aussparungen 31 und 33 auf der Oberseite des Schutzrohres 32 angeordnet bleiben.

Zu Wartungszwecken der Universallager 18 und 20, die nun von der Schutzvorrichtung 30 umschlossen werden, wird die die Arretierscheibe 90 haltende Schraube gelöst, bis sich die Arretierscheibe 90 mindestens 13 mm von der Lagerhülse 34 abheben lässt, so dass das Schutzrohr 32 nicht mehr drehfest gehalten wird. Anschliessend werden die Schutzkappen 80 aus den Aussparungen 31, 33 gezogen und um die in die Bohrungen 35 und 37 eingesetzten Schrauben nach unten geschwenkt. Das Schutzrohr 32 wird alsdann soweit gedreht, bis die Schmierstellen an den Universalgelenken 18 und 20 durch die Aussparungen 31 und 33 erreicht und gewartet werden können. Abschliessend werden die Schutzkappen 80 wieder zurück in die Aussparungen 31 und 33 geschwenkt und in diese eingepresst und das Schutzrohr 32 wird zurück in die anfängliche Stellung gedreht, in der die Aussparungen 31 und 33 nach oben zeigen und der es über die in die Ausrichtöffnungen einzusetzende Arretierscheibe 90 festgelegt wird. Die Arretierscheibe 90 wird dann mit der Schraube befestigt.

## Patentansprüche

1. Schutzvorrichtung (30) für eine Welle (16), insbesondere für eine Antriebswelle eines Vorderradantriebs eines Ackerschleppers (10), die sich zwischen einem Getriebegehäuse (12, 14) und einem Gehäuse (26) koaxial zu der Welle (16) erstreckt und die gegenüber dem Getriebegehäuse (12, 14) festlegbar ist, dadurch gekennzeichnet, dass die Schutzvorrichtung (30) aus einem ersten und einem zweiten Halter (34, 50) und einem die Welle (16) umfangsmässig voll umgebenden Schutzrohr (32) besteht, wobei der erste Halter (34) an dem Getriebegehäuse (12, 14) und der zweite Halter (50) an dem Gehäuse (26) befestigt ist, das Schutzrohr (32) auf oder in dem ersten und dem zweiten Halter (34 und 50) drehbar gelagert und festlegbar ist, verschliessbare Aussparungen für Wartungszwecke (31, 33) aufweist und stirnseitig stets geschlossen ist.

2. Schutzvorrichtung nach Anspruch 1, dadurch gekennzeichnet, dass das Schutzrohr (32) gegenüber den Haltern (34, 50) um die Längsmittenachse der Welle (16) mindestens aus einer Stellung der Aussparungen (31, 33) oberhalb in eine Stellung unterhalb der Welle (16) drehbar ist.

3. Schutzvorrichtung nach Anspruch 1 oder 2, dadurch gekennzeichnet, dass die Aussparungen (31, 33) in dem Schutzrohr (32) mittels der Aussenform des Schutzrohres (32) angepasster Deckel (80), die an dem Schutzrohr (32) festlegbar sind, verschliessbar sind.

4. Schutzvorrichtung nach Anspruch 1, dadurch gekennzeichnet, dass in dem Schutzrohr (32) oder in einem der Halter (34, 50) eine Ausnehmung (39) und auf dem betreffenden Halter (34, 50) oder dem Schutzrohr (32) ein in die Ausnehmung (39) passendes Halteelement (90) vorgesehen ist.

5. Schutzvorrichtung nach Anspruch 4, dadurch gekennzeichnet, dass das Halteelement (90) eine der Aussenform des Schutzrohres (32) angepasste Scheibe (90) ist, die in die halbkreisförmige Ausnehmung (39) in dem Schutzrohr (32) einsetzbar ist.

6. Schutzvorrichtung nach einem oder mehreren der vorherigen Ansprüche, mit einem stirnseitigen Ringspalt zwischen der Schutzvorrichtung (30) und der Welle (16), dadurch gekennzeichnet, dass zwei Dichtplatten (70) vorgesehen sind, die je zumindest die Hälfte des Ringspaltes ausfüllen, in den Ringspalt einsetzbar sind und als axiale Halterung des Schutzrohres (32) dienen.

7. Schutzvorrichtung nach einem oder mehreren der vorherigen Ansprüche, dadurch gekennzeichnet, dass der erste Halter (34) an dem Getriebegehäuse (12, 14) im Querschnitt rund ist, eine ballige Oberfläche aufweist und das Schutzrohr (32) an der anderen Stirnseite abschliesst.

## Revendications

1. Dispositif de protection (30) pour un arbre (16), en particulier pour un arbre de transmission d'un mécanisme de traction avant d'un tracteur agricole (10) qui s'étend entre un carter de boîte de vitesses (12, 14) et un carter (26) coaxialement à l'arbre (16) et qui peut être immobilisé par rapport au carter de boîte de vitesses (12, 14), caractérisé en ce que le dispositif de protection (30) comprend un premier support et un second support (34, 50) et un tube de protection (32) entourant périphériquement complètement l'arbre (16), le premier support (34) étant fixé au carter de boîte de vitesses (12, 14) et le second support (50) au carter (26), le tube de protection (32) étant placé de façon à pouvoir tourner sur ou dans le premier support et le second support (34 et 50) et pouvant être immobilisé, comportant des évidements obturables à des fins d'entretien (31, 33) et étant constamment fermé frontalement.

2. Dispositif de protection suivant la revendication 1, caractérisé en ce que le tube de protection (32) peut tourner par rapport aux supports (34, 50) autour de l'axe de symétrie longitudinal de l'arbre (16) au moins d'une position des évidements (31, 33) au-dessus à une position au-dessous de l'arbre (16).

3. Dispositif de protection suivant la revendication 1 ou 2, caractérisé en ce que les évidements (31, 33) formés dans le tube de protection (32) peuvent être obturés au moyen de couvercles (80) adaptés à la forme extérieure du tube de protection (32) qui peuvent être fixés sur le tube de protection (32).

4. Dispositif de protection suivant la revendication 1, caractérisé en ce qu'on prévoit dans le tube de protection (32) ou dans l'un des supports (34, 50) un évidement (39) et, sur le support (34, 50) en question ou sur le tube de protection (32), un élément de retenue (90) s'emboîtant dans l'évidement (39).

5. Dispositif de protection suivant la revendication 4, caractérisé en ce que l'élément de retenue (90) est un disque (90) adapté à la forme extérieure du tube de protection (32), qui peut être inséré dans l'évidement semi-circulaire (39) pratiqué dans le tube de protection (32).

6. Dispositif de protection suivant une ou plusieurs des revendications précédentes, comportant un interstice annulaire frontal entre le dispositif de protection (30) et l'arbre (16), caractérisé en ce qu'on prévoit deux plaques d'étanchéité (70) qui comblent chacune au moins la moitié de l'interstice annulaire, peuvent être insérées dans l'interstice annulaire et servent à la fixation axiale du tube de protection (32).

7. Dispositif de protection suivant une ou plusieurs des revendications précédentes, caractérisé en ce que le premier support (34) situé sur le carter de boîte de vitesses (12, 14) a une section droite ronde, présente une surface bombée et peut obturer le tube de protection (32) de l'autre côté frontal.

**Claims**

1. Protective device (30) for a shaft (16), especially for a drive shaft of a front wheel drive of an agricultural tractor (10), which extends between a gearbox housing (12, 14) and a housing (26) coaxial with the shaft (16) and which can be fixed relative to the gearbox housing (12, 14), characterized in that the protective device (30) consists of a first and a second holder (34, 50) and a protective tube (32) completely surrounding the shaft (16), wherein the first holder (34) is fixed on the gearbox housing (12, 14) and the second holder (50) on the housing (26), the protective tube (32) is rotatably mounted on or in the first and the second holder (34, 50) and can be fixed, has closable cut-outs for servicing (31, 33) and is endwise always closed.

2. Protective device according to claim 1, characterized in that the protective tube (32) is rotatable relative to the holders (34, 50) about the longitudinal axis of the shaft (16) at least from a position of the cut-outs (31, 33) above the shaft (16) into a position below the shaft (16).

3. Protective device according to claim 1 or 2, characterized in that the cut-outs (31, 33) in the protective tube (32) can be closed by means of covers (80) matching the outer form of the protective tube (32), which can be fixed to the protective tube (32).

4. Protective device according to claim 1, characterized in that a recess (39) is provided in the protective tube (32) or in one of the holders (34, 50) and on the holder (34, 50) in question or the protective tube (32) a retaining element (90) matching the recess (39) is provided.

5. Protective device according to claim 4, characterized in that the retaining element (90) is a disc (90) matching the outer form of the protective tube (32), which disc can be fitted in the semi-circular recess (39) in the protective tube (32).

6. Protective device according to one or more of the preceding claims, with an endwise annular gap between the protective device (30) and the shaft (16), characterized in that two sealing plates (70) are provided, which each fill in at least half of the annular gap, can be fitted in the annular gap and serve as axial retainer of the protective tube (32).

7. Protective device according to one or more of the preceding claims, characterized in that the first holder (34) on the gearbox housing (12, 14) is round in cross-section, has a crowned surface and closes the protective tube (32) at the other end. .

1/6

## Fig.1

*10*

*22*

*12* *14* *18* *16* *20*

## Fig. 2

*26*

*62*

*32*

*52* *60* *64*

*50*

2/6

Fig. 3

Fig. 4

Fig. 5

Fig. 6

EP 0 173 898 B1

3/6

38
38
8
36
8
34
38
44
46

**Fig. 7**

34

42

**Fig. 8**

36
38

41
40

11

4/6

Fig. 9

60

50

62

56

58

56

56

64

54

52

58

60

Fig. 10

72

74

76

70

EP 0 173 898 B1

5/6

*Fig. 12*

80 82

*Fig. 13*

13

86

84

80

82

12 12

86

84

80

82

13

*Fig. 11*

15

*Fig. 14*

70

52

50

56

72

74

70

34

31

*14*

39

*32*

90

*Fig. 15*